# EUROPEAN PATENT APPLICATION

(11) **EP 4 788 046 A1**
(43) Date of publication of application: **05.08.2026**
(21) Application number: 24901116.4
(22) Date of filing: 06.12.2024
(51) Int. Cl.: H04W 76/14, H04W 24/08, G06F 3/14

(54) **ELECTRONIC DEVICE, TARGET DEVICE, AND CONTROL METHOD THEREOF**

(30) Priority: 08.12.2023 KR 20230177953
(71) Applicant: Samsung Electronics Co., Ltd., Suwon-si, Gyeonggi-do 16677 (KR)
(72) Inventor: KIM, Hyunsoo, Suwon-si Gyeonggi-do 16677 (KR); KIM, Jinhwan, Suwon-si Gyeonggi-do 16677 (KR); JEONG, Jinwoo, Suwon-si Gyeonggi-do 16677 (KR); HAHM, Seongil, Suwon-si Gyeonggi-do 16677 (KR)
(74) Representative: Walaski, Jan Filip
(86) International application number: PCT/KR2024/019909
(87) International publication number: WO 2025/121930

(57) **Abstract**

An electronic device and a method thereof where the electronic device includes a communicator, a memory to store at least one instruction and information associated with a plurality of access points (APs), and a processor. The processor, based on receiving a request for network setting of a target device, identifies at least one candidate AP for the network setting of the target device based on the information associated with the plurality of APs stored in the memory, controls the communicator to transmit AP information associated with the at least one candidate AP to the target device, and based on receiving, from the target device through the communicator, information that an AP connectable with the target device exists among the at least one candidate AP as a response to the AP information transmitted to the target device, identifies that the network setting of the target device is possible.

## Description

### [Technical Field]

The disclosure relates to a target device and a controlling method thereof, and more particularly, to an electronic device that can perform a connecting process between a target device and an AP, a target device, and a controlling method thereof.

### [Background Art]

Recently, technologies related to the Internet of Things (IoT) are developing rapidly. In particular, recently, development of technologies for effectively implementing a process of registering a target device as a device constituting an IoT network, i.e., an onboarding process is going on.

However, according to the conventional technology, in establishing connection between a target device and an access point (AP), a process of transmitting information on searched APs to an electronic device for helping with network setting of a target device after the target device searched ambient APs, and a process of waiting for reception of a user input selecting one of the searched APs at the electronic device are required.

Therefore, according to the conventional technology, there are problems that time is spent for transmitting information on APs searched by a target device to an electronic device, and in particular, in case the packet size increases according to the number of the searched APs, the transmission time further increases, and the probability of transmission failure becomes higher.

Also, regarding the conventional technology, problems are being pointed out which are that an unnecessary screen is displayed, and a waiting time is spent in a process of waiting for a user input selecting one of the searched APs at an electronic device.

In addition, regarding the conventional technology, a problem is being pointed out which is that, as only information on one AP selected at an electronic device is transmitted to a target device, in case connection between the one AP and the target device is not constituted or disconnection occurs after connection is constituted, an effective solution cannot be suggested.

### [Disclosure]

### [Technical Solution]

The disclosure is for resolving the aforementioned problems of the conventional technology, and the purpose of the disclosure is in providing an electronic device that can effectively perform a connecting process between a target device and an AP and at the same time, improve the connection success rate, a target device, and a controlling method thereof.

According to an embodiment of the disclosure for achieving the aforementioned purpose, an electronic device includes a communicator, a memory to store at least one instruction and information associated with a plurality of access points (APs), and a processor configured to execute the at least one instruction, wherein the processor is configured to, based on receiving a request for network setting of a target device, identify at least one candidate AP for the network setting of the target device among the plurality of APs based on the information associated with the plurality of APs stored in the memory, control the communicator to transmit AP information associated with the at least one candidate AP to the target device, and based on receiving, from the target device through the communicator, information indicating that an AP connectable with the target device exists among the at least one candidate AP as a response to the AP information transmitted to the target device, identify that the network setting of the target device is possible.

The electronic device may further include a display, and the AP information transmitted to the target device may be first AP information, and the processor may, based on receiving second AP information associated with a plurality of other APs searched by the target device as the response to the first AP information from the target device through the communicator, control the display to display a user interface including the second AP information, and based on receiving a user input selecting one AP among the other plurality of APs searched by the target device, through the user interface, control the communicator to transmit third AP information regarding the selected one AP to the target device, and based on receiving information indicating that determination to connect the target device to the selected one AP is made as a response for the third AP information from the target device through the communicator, identify that the network setting of the target device is possible.

Meanwhile, the processor may, based on two or more candidate APs being identified as the at least one candidate AP, determine priorities between the two or more candidate APs, and control the communicator to transmit information associated with the priorities and a request to attempt connection for the two or more candidate APs according to the priorities to the target device.

Meanwhile, the request to attempt connection for the two or more candidate APs according to the priorities may include a request to attempt connection for at least one AP that has a history of having been connected to the electronic device, and in case the reque st to attempt connection for the at least one AP that has the history of having been connected to the electronic device fails, attempt connection for at least one AP that has history of having been connected to at least one external device.

Meanwhile, the processor may identify an installation location of the target device and an installation location of the at least one external device, and in case connection for an AP connected to the electronic device fails, control the communicator to transmit a request to preferentially attempt connection for an AP that has a history of having been connected to an external device of which installation location is identical to the target device among the at least one external device to the target device.

Meanwhile, the processor may identify the installation location of the target device and the installation location of the at least one external device based on a type of the target device and a type of the at least one external device.

Meanwhile, the processor may receive a first signal and a second signal respectively from the target device and the at least one external device through the communicator, obtain information associated with the strength of a first signal and information associated with a strength of the second signal, and identify the installation location of the target device and the installation location of the at least one external device based on the information associated with the strength of the first signal and the information as sociated with the strength of the second signal.

According to an embodiment of the disclosure for achieving the aforementioned purpose, a target device includes a communicator, a memory to store at least one instruction, and a processor configured to execute the at least one instruction, wherein the processor may receive AP information for at least one candidate access point (AP) for network setting of the target device from an electronic device through the communicator, identify whether an AP connectable with the target device exists among the at least one candidate AP, and based on identifying that an AP connectable with the target device exists among the at least one candidate AP, control the communicator to transmit, to the electronic device, information indicating that an AP connectable with the target device exists as a respo nse to the received AP information for the at least one candidate AP.

The AP information transmitted to the target device may be, according to an e mbodiment, first AP information. Meanwhile, the processor may, based on identifying that an AP connectable with the target device does not exist among the at least one candidate AP, perform a search in association with a plurality of APs, control the communicator to transmit second AP information associated with the plurality of APs to the electronic device, and based on receiving third AP information regarding an AP selected according to a user input among the plurality of APs from the electronic device through the communicator, determine to connect the target device to the selected AP, and control the communicator to transmit information indicating determination to connect the target device to the selected AP is made to the electronic device.

Meanwhile, the processor may search a plurality of APs, and based on the at least one candidate AP being included in the plurality of APs, identify that an AP connectable with the target device exists among the at least one candidate AP.

Meanwhile, the processor may perform a search in association with a plurality of APs, and based on the at least one candidate AP being included in the plurality of APs, obtain information associated with a strength of a signal received from the at least one candidate AP, and based associated with the information associated with the strength of the signal, identify whether an AP connectable with the target device exists among the at least one candidate AP.

Meanwhile, the processor may, based on receiving information associated with the priorities among the at least one candidate AP and a request to attempt connection for two or more candidate APs according to the priorities from the electronic device through the communicator, identify whether an AP connectable with the target device exists among the two or more candidate APs according to the priorities.

According to an embodiment of the disclosure for achieving the aforementioned purpose, a controlling method of an electronic device includes, based on receiving a request for network setting of a target device, identifying at least one candidate AP for the network setting of the target device among a plurality of access points (APs) based on information associated with the plurality of APs stored in the memory, transmitting first AP information associated with the at least one candidate AP to the target device, and based on receiving, from the target device, information indicating that an AP connectable with the target device exists among the at least one candidate AP as a response to the AP information transmitted to the target device, identifying that the network setting of the target device is possible.

The AP information transmitted to the target device may be, according to an e mbodiment, first AP information. Meanwhile, the controlling method of an electronic device may include, based on receiving second AP information associated with a plurality of other APs searched by the target device as a response for the first AP information from the target device, providing a user interface including the second AP information, and based on receiving a user input selecting one AP among the plurality of APs through the user interface, transmitting third AP information regarding the selected one AP to the target device, and based on receiving information indicating determination to connect the target device to the selected one AP is made as a response for the third AP information from the target device, identifying that the network setting of the target device is possible.

Meanwhile, the controlling method of an electronic device may further include the steps of, based on identifying two or more candidate APs as the at least one candidate AP, determining the priorities between the two or more candidate APs, and transmitting information associated with the priorities and a request to attempt connection for the two or more candidate APs according to the priorities to the target device.

### [Description of Drawings]

FIG. 1 is a flow chart illustrating a controlling method of an electronic device according to an embodiment of the disclosure;
FIG. 2 is a flow chart for illustrating an embodiment related to a case wherein information indicating that an AP that can be connected with a target device exists is not received;
FIG. 3 is a diagram for illustrating an embodiment related to identifying a candidate AP based on an installation location of a target device and an installation location of an external device;
FIG. 4 is a flow chart illustrating a controlling method of a target device according to an embodiment of the disclosure;
FIG. 5 is a diagram for illustrating an embodiment related to a case wherein an AP that can be connected with a target device does not exist among at least one candidate AP;
FIG. 6 is a diagram for illustrating an embodiment related to a process of identifying whether an AP that can be connected with a target device exists among at least one candidate AP;
FIG. 7 is a block diagram schematically illustrating a configuration of an electronic device according to an embodiment of the disclosure;
FIG. 8 is a block diagram illustrating in detail a configuration of an electronic device according to an embodiment of the disclosure;
FIG. 9 is a block diagram schematically illustrating a configuration of a target device according to an embodiment of the disclosure; and
FIG. 10 is a block diagram illustrating in detail a configuration of a target device according to an embodiment of the disclosure.

### [Mode for Invention]

Various modifications may be made to the embodiments of the disclosure, and there may be various types of embodiments. Accordingly, specific embodiments will be illustrated in drawings, and the embodiments will be described in detail in the detailed description. However, it should be noted that the various embodiments are not for limiting the scope of the disclosure to a specific embodiment, but they should be interpreted to include all modifications, equivalents, and/or alternatives of the embodiments of the disclosure. Meanwhile, with respect to the detailed description of the drawings, similar components may be designated by similar reference numerals.

Also, in case it is determined that in describing the disclosure, detailed explanation of related known functions or components may unnecessarily confuse the gist of the disclosure, the detailed explanation will be omitted.

In addition, the embodiments below may be modified in various different forms, and the scope of the technical idea of the disclosure is not limited to the embodiments below. Rather, these embodiments are provided to make the disclosure more sufficient and complete, and to fully convey the technical idea of the disclosure to those skilled in the art.

Further, the terms used in the disclosure are used only to explain specific embodiments, and are not intended to limit the scope of the disclosure. In addition, singular expressions include plural expressions, unless defined obviously differently in the context.

Also, in the disclosure, expressions such as "have," "may have," "include," and "may include" denote the existence of such characteristics (e.g.: elements such as numbers, functions, operations, and components), and do not exclude the existence of additional characteristics.

In addition, in the disclosure, the expressions "A or B," "at least one of A and/or B," or "one or more of A and/or B" and the like may include all possible combinations of the listed items. For example, "A or B," "at least one of A and B," or "at least one of A or B" may refer to all of the following cases: (1) including at least one A, (2) including at least one B, or (3) including at least one A and at least one B.

Further, the expressions "first," "second," and the like used in the disclosure may describe various elements regardless of any order and/or degree of importance. Also, such expressions are used only to distinguish one element from another element, and are not intended to limit the elements.

Meanwhile, the description in the disclosure that one element (e.g.: a first element) is "(operatively or communicatively) coupled with/to" or "connected to" another element (e.g.: a second element) should be interpreted to include both the case where the one element is directly coupled to the another element, and the case where the one element is coupled to the another element through still another element (e.g.: a third element).

In contrast, the description that one element (e.g.: a first element) is "directly coupled" or "directly connected" to another element (e.g.: a second element) can be interpreted to mean that still another element (e.g.: a third element) does not exist between the one element and the another element.

Also, the expression "configured to" used in the disclosure may be interchangeably used with other expressions such as "suitable for," "having the capacity to," "designed to," "adapted to," "made to," and "capable of," depending on cases. Meanwhile, the term "configured to" may not necessarily mean that a device is "specifically designed to" in terms of hardware.

Instead, under some circumstances, the expression "a device configured to" may mean that the device "is capable of" performing an operation together with another device or component. For example, the phrase "a processor configured to perform A, B, and C" may mean a dedicated processor (e.g.: an embedded processor) for performing the corresponding operations, or a generic-purpose processor (e.g.: a CPU or an application processor) that can perform the corresponding operations by executing one or more software programs stored in a memory device.

Also, in the embodiments of the disclosure, 'a module' or 'a part' may perform at least one function or operation, and may be implemented as hardware or software, or as a combination of hardware and software. In addition, a plurality of 'modules' or 'parts' may be integrated into at least one module and implemented as at least one processor, excluding 'a module' or 'a part' that needs to be implemented as specific hardware.

Meanwhile, various elements and areas in the drawings were illustrated schematically. Accordingly, the technical idea of the disclosure is not limited by the relative sizes or intervals illustrated in the accompanying drawings.

Hereinafter, the embodiments according to the disclosure will be described in detail with reference to the accompanying drawings, such that those having ordinary skill in the art to which the disclosure belongs can easily carry out the disclosure.

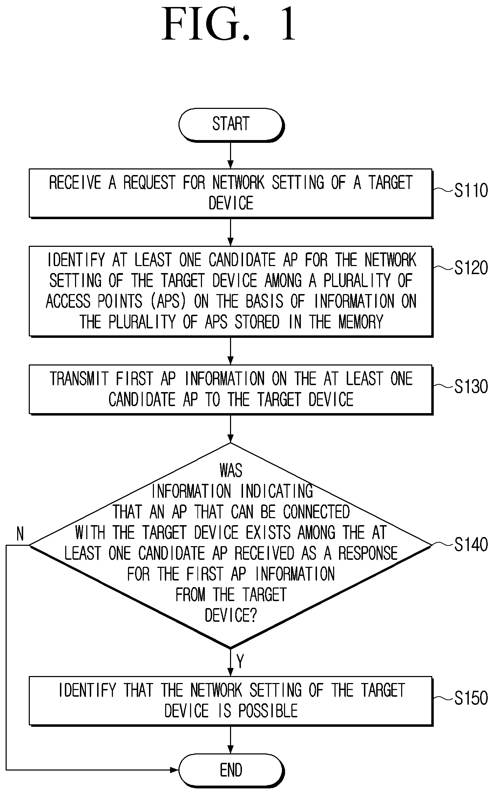

FIG. 1 is a flow chart illustrating a controlling method of an electronic device 100 according to an embodiment of the disclosure.

'The electronic device 100' according to the disclosure refers to a device that can be involved in network setting of a target device 200. Specifically, the electronic device 100 may help with the network setting of the target device 200 including transmitting information on an AP to the target device 200 through communicative connection with the target device 200, or transmitting a user input selecting an AP to the target device 200. In this sense, the electronic device 100 may be referred to as a so-called 'helper device.'

'The target device 200' refers to a device that becomes a subject of network setting. In particular, the target device 200 is a device that was not registered as a device constituting an Internet of Things (IoT) network, and it may refer to a device that can be registered as a device constituting an IoT network.

For example, the electronic device 100 may be a device through which it is easy to receive a user input related to network setting and provide related information as it includes a display, like a smartphone, a tablet PC, a TV, etc., and the target device 200 may be a device through which it is relatively difficult to receive a user input related to network setting and provide related information (e.g.: a so-called headless home appliance that operates without a screen or a touch interface) compared to the electronic device 100, like an air conditioner, a washing machine, a cleaner, etc. However, there is no special limitation on the types of the electronic device 100 and the target device 200 according to the disclosure.

Meanwhile, the term target device 200 is just for separately specifying the electronic device 100 and the target device 200, and the term target device 200 may also be replaced by the term electronic device 200. Also, the electronic device 100 and the target device 200 may respectively be referred to as a first electronic device 100 and a second electronic device 200.

As illustrated in FIG. 1, the electronic device 100 may receive a request for network setting of the target device 200 in operation S110. Here, 'a request for network setting of the target device 200' may include a request for setting a network of the target device 200 by connecting the target device 200 to an access point (AP). Also, a request for network setting of the target device 200 may include a request for registering the target device 200 as an IoT device.

Specifically, the electronic device 100 may receive a request for network setting of the target device 200 from the target device 200, or receive a request for network setting of the target device 200 based on a user input that was input into the electronic device 100, or obtain a request for network setting of the target device 200 based on occurrence of a predetermined event at the electronic device 100.

When a request for network setting of the target device 200 is received, the electronic device 100 may identify at least one candidate AP for the network setting of the target device 200 among a plurality of APs based on information on the plurality of APs stored in the memory in operation S120.

Here, 'information on the plurality of APs' may include identification information of the plurality of APs (e.g.: a service set identifier (SSID)) and password information for connecting to the plurality of APs. Also, the information on the plurality of APs may include information on at least one AP that has history of having been connected to the electronic device 100, and information on at least one AP that has history of having been connected to at least one external device. The term 'history of having been connected' may include not only a state wherein an AP is currently connected, but also a state wherein an AP was connected in the past but is not currently connected.

The information on an AP that has history of having been connected to an external device may have been obtained in a process of performing network setting of an external device by using the electronic device 100, or the information may have been obtained by receiving it from an external device.

For example, in case the target device 200 is a washing machine, the information on the plurality of APs may include not only information on a first AP that has history of having been connected to the electronic device 100, but also information on a second AP that has history of having been connected to a dryer. Depending on embodiments, the information on the plurality of APs may also include information on APs that were searched by the electronic device 100.

Meanwhile, the term 'candidate APs' is used as a term for referring to APs that were identified to be APs for network setting of the target device 200 by the electronic device 100 among the plurality of APs. In other words, the term 'candidate APs' means a collection of APs identified by the electronic device 100 according to a predetermined standard, and thus it may be distinguished from 'APs searched' by the electronic device 100 or the target device 200.

Specifically, the electronic device 100 may identify all of the plurality of APs included in the information on the plurality of APs as candidate APs, but the electronic device 100 may also identify only some APs among them as candidate APs. There is no special limitation on the number of the candidate APs, and depending on embodiments, only candidate APs of a predetermined threshold number may be identified.

According to an embodiment, the electronic device 100 may identify at least one candidate AP among the plurality of APs based on the time, the number of times, the connection state, etc. of the connection of the plurality of APs to the electronic device 100 or an external device. For example, an AP for which time greater than or equal to threshold time passed after its connection with the electronic device 100, or an AP of which number of times of having been connected to the electronic device 100 is smaller than a threshold number of times among the plurality of APs that have history of having been connected with the electronic device 100 may not be included in the at least one candidate AP. Other than the above, various standards for identifying an AP having high possibility of being connected with the target device 200 or an AP having a high success rate of being connected with the target device 200 as a candidate AP may be used in identification of a candidate AP.

When at least one candidate AP is identified, the electronic device 100 may transmit first AP information on the at least one candidate AP to the target device 200 in operation S130. Here, 'the first AP information' means information on the at least one candidate AP identified by the electronic device 100, and it may include identification information of the candidate AP and password information for connecting to the candidate AP.

In case a request for network setting of the target device 200 is received from the target device 200, as communicative connection between the electronic device 100 and the target device 200 has already been established, the electronic device 100 may transmit the first AP information to the target device 200 through the established communicative connection.

In contrast, if a request for network setting of the target device 200 is received based on a user input that was input into the electronic device 100 or a predetermined event that occurred at the electronic device 100, the electronic device 100 may establish communicative connection with the target device 200, and transmit the first AP information to the target device 200 through the established communicative connection.

In case two or more candidate APs are identified as candidate APs, the electronic device 100 may set priorities for the two or more candidate APs, and transmit information on the priorities between the two or more candidate APs and a request to attempt connection for the two or more candidate APs according to the priorities to the target device 200. In other words, in case the at least one candidate AP is two or more candidate APs, the first AP information may include information on the priorities between the two or more candidate APs and a request to attempt connection for the two or more candidate APs according to the priorities.

For example, if two or more candidate APs are identified as candidate APs, the electronic device 100 may grant the highest priority to a candidate AP that has history of having been connected to the electronic device 100 among the two or more candidate APs, and grant the second highest priority to a candidate AP that has history of having been connected to an external device. In this case, a request to attempt connection for the two or more candidate APs according to the priorities may include a request to preferentially attempt connection for an AP that has history of having been connected to the electronic device 100, and in case the connection for the AP that has history of having been connected to the electronic device 100 fails, to attempt connection for an AP that has history of having been connected to the at least one external device.

Meanwhile, the electronic device 100 may include only information on candidate APs having priorities greater than or equal to a predetermined threshold priority among the identified candidate APs in the first information, and transmit the information to the target device 200. For example, in case priorities of 1 to 5 are granted to each of the first candidate AP, the second candidate AP, the third candidate AP, the fourth candidate AP, and the fifth candidate AP, and the predetermined threshold priority is 3, the electronic device 100 may transmit only information on the first candidate AP, the second candidate AP, and the third candidate AP to the target device 200.

Meanwhile, the electronic device 100 may grant different priorities to two or more candidate APs that have history of having been connected to the electronic device 100 based on the time, the number of times, the connection state, etc. of their connection with the electronic device 100.

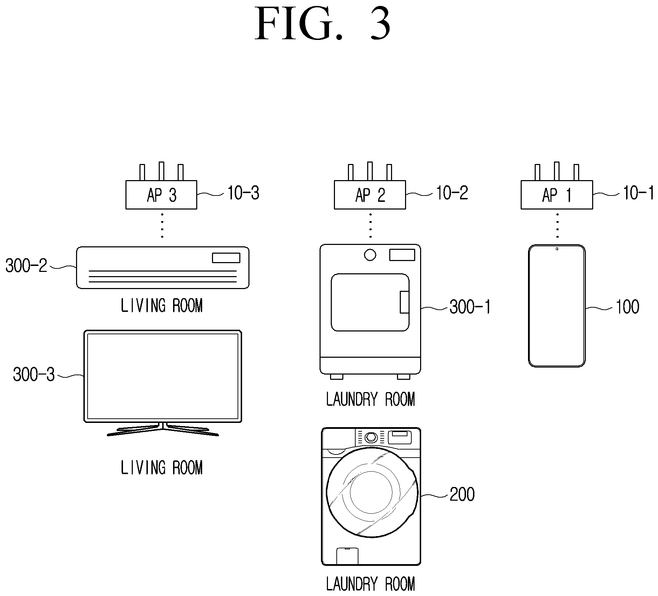

Meanwhile, regarding to which candidate APs high priorities will be granted in case a plurality of different candidate APs that have history of having been connected to a plurality of different external devices are included in the two or more candidate APs, detailed explanation will be described with reference to FIG. 3.

If information indicating that an AP that can be connected with the target device 200 exists among the at least one candidate AP is received as a response for the first AP information from the target device 200 in operation S140-Y, the electronic device 100 may identify that network setting of the target device 200 is possible.

Specifically, if the first AP information is transmitted from the electronic device 100 to the target device 200, the target device 200 may identify whether an AP that can be connected with the target device 200 exists among the at least one candidate AP based on the first AP information, and transmit the identification result to the electronic device 100. Then, if the identification result transmitted from the target device 200 to the electronic device 100 indicates that an AP that can be connected with the target device 200 exists among the at least one candidate AP, the electronic device 100 may identify that network setting of the target device 200 is possible.

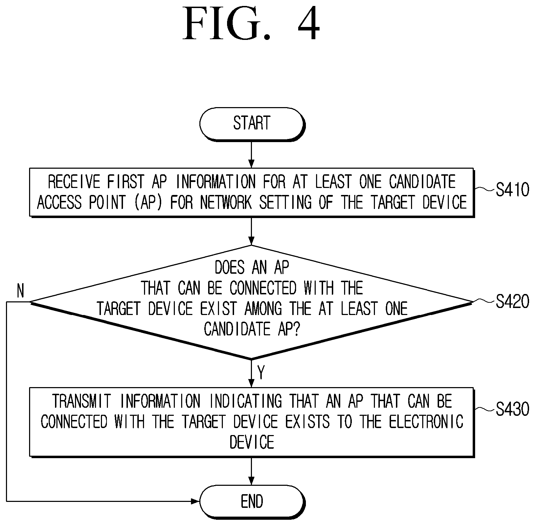

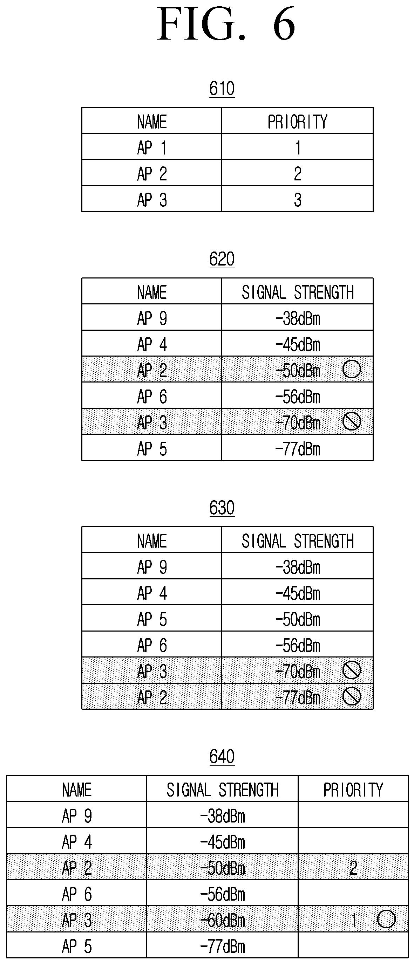

Meanwhile, as the process of identifying whether an AP that can be connected with the target device 200 exists among the at least one candidate AP is an operation performed by the target device 200, detailed explanation in this regard will be described in the explanation regarding FIG. 4 and FIG. 6.

Meanwhile, in case information indicating that an AP that can be connected with the target device 200 exists among the at least one candidate AP is received, the electronic device 100 may identify that the target device 200 can be registered as an IoT device, instead of identifying that network setting of the target device 200 is possible.

The feature that the electronic device 100 identifies that network setting of the target device 200 is possible may mean that an operation of the electronic device 100 of being involved in the network setting of the target device 200 was completed. Meanwhile, after identifying that network setting of the target device 200 is possible, the electronic device 100 may receive information indicating that connection between a specific AP among the at least one candidate AP and the target device 200 was completed from the target device 200. Also, the electronic device 100 may receive information indicating that the target device 200 was registered as a device constituting an IoT network from the target device 200 or a server providing a platform for an IoT.

Meanwhile, in the above, a case wherein, while communicative connection has been established between the electronic device 100 and the target device 200 by a Wi-Fi communication method, the electronic device 100 receives information indicating that an AP that can be connected with the target device 200 exists among the at least one candidate AP as a response for the first AP information from the target device 200 was described.

Specifically, in case communicative connection is established between the electronic device 100 and the target device 200 by a Wi-Fi communication method, the target device 200 may finish communicative connection between the electronic device 100 and the target device 200 for connection with an AP, and after performing connection with an AP, access a server providing a platform for an IoT and register the target device 200 as a device constituting an IoT network. Afterwards, the electronic device 100 may receive information indicating that the target device 200 was registered as a device constituting the IoT network from the server, and accordingly, the electronic device 100 may identify that the target device 200 was registered as a device constituting the IoT network.

Meanwhile, communicative connection may be established between the electronic device 100 and the target device 200 by communication methods such as Bluetooth, NFC, etc. other than a Wi-Fi communication method, and in this case, the target device 200 does not need to finish communicative connection between the electronic device 100 and the target device 200 for connecting to an AP. Accordingly, in case communicative connection is established between the electronic device 100 and the target device 200 by other communication methods which are not a Wi-Fi communication method, the electronic device 100 may receive information indicating that the target device 200 was connected to one AP among the at least one candidate AP as a response for the first AP information, or receive information indicating that the target device 200 was registered as a device constituting the IoT network from the target device 200.

According to the various embodiments described with reference to FIG. 1 above, the electronic device 100 can effectively perform a connecting process between the target device 200 and an AP, and at the same time, improve the connection success rate. In particular, as the electronic device 100 identifies an AP having high possibility of being connected with the target device 200 or an AP having a high success rate of being connected with the target device 200 as a candidate AP, and transmits the first information in that regard to the target device 200, a process wherein the target device 200 searches ambient APs, a process wherein the target device 200 transmits information on the searched APs to the electronic device 100, etc. can be omitted, and thus efficiency in a network connection process of the target device 200 can be noticeably improved.

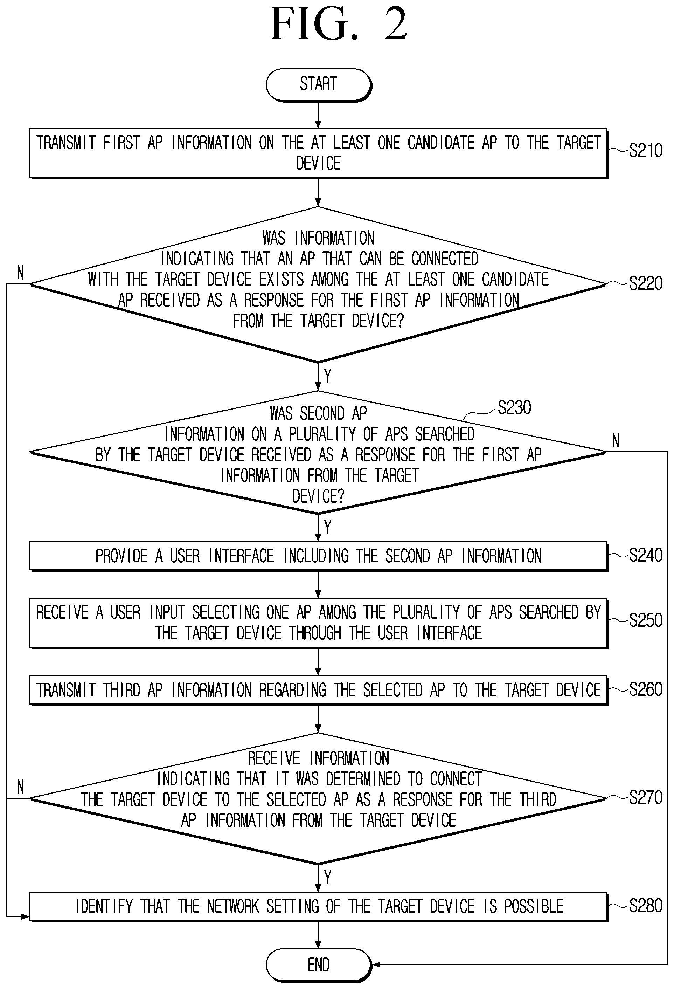

Meanwhile, in case information indicating that an AP that can be connected with the target device 200 exists is not received in operation S140-N, the electronic device 100 performs an additional operation related to network setting of the target device 200, and explanation in this regard will be described with reference to FIG. 2 below.

FIG. 2 is a flow chart for illustrating an embodiment related to a case wherein information indicating that an AP that can be connected with the target device 200 exists is not received.

As explained with reference to FIG. 1, the electronic device 100 may transmit the first AP information on at least one candidate AP to the target device 200 in operation S210, and if information indicating that an AP that can be connected with the target device 200 exists among the at least one candidate AP is received as a response for the first AP information from the target device 200 in operation S220-Y, the electronic device 100 may identify that the network setting of the target device 200 is possible in operation S280.

Meanwhile, if information indicating that an AP that can be connected with the target device 200 exists among the at least one candidate AP is not received as a response for the first AP information from the target device 200 in operation S220-N, and second AP information on a plurality of APs searched by the target device 200 is received in operation S230-Y, the electronic device 100 may provide a user interface including the second AP information in operation S240.

Specifically, if the first AP information is transmitted from the electronic device 100 to the target device 200, the target device 200 may identify whether an AP that can be connected with the target device 200 exists among the at least one candidate AP based on the first AP information, and transmit the identification result to the electronic device 100. In particular, if it is identified that an AP that can be connected with the target device 200 does not exist among the at least one candidate AP, the target device 200 may transmit the second AP information as the identification result to the electronic device 200.

Here, 'the second AP information' means information on a plurality of APs searched by the target device 200, and it may include identification information on each of the plurality of APs and information on the strength of signals transmitted from the plurality of APs to the target device 200.

Also, if the identification result transmitted from the target device 200 to the electronic device 100 is the second AP information on the plurality of APs searched by the target device 200, the electronic device 100 may identify that an AP that can be connected with the target device 200 does not exist among the at least one candidate AP, and display a user interface including the second AP information on the display of the electronic device 100.

The electronic device 100 may receive a user input selecting one AP among the plurality of APs searched by the target device 200 through a user interface in operation S250, and transmit third AP information regarding the selected AP to the target device 200 in operation S260.

Specifically, a user may input a user input selecting one AP among the plurality of APs, by referring to the identification information on the plurality of APs and the information on the strength of signals transmitted from the plurality of APs to the target device 200 included in the user interface. Accordingly, the electronic device 100 may transmit the third AP information regarding the selected AP to the target device 200.

Here, 'the third AP information' means information on the AP selected according to the user input, and it may include identification information of the selected AP and password information for connecting to the selected AP.

Meanwhile, the number of an AP selected according to a user input may be one, but the number may be two or more depending on embodiments, and accordingly, the number of APs included in the third AP information may also be two or more.

If information indicating that it was determined to connect the target device 200 to the selected AP is received as a response for the third AP information from the target device 200 in operation S270-Y, the electronic device 100 may identify that the network setting of the target device 200 is possible in operation S280.

Specifically, if the third AP information is transmitted from the electronic device 100 to the target device 200, the target device 200 may determine that the target device 200 is connected to the selected AP, and transmit information indicating that it was determined to connect the target device 200 to the selected AP to the electronic device 100. Accordingly, the electronic device 100 may identify that network setting of the target device 200 is possible.

Meanwhile, as described above, communicative connection may be established between the electronic device 100 and the target device 200 by communication methods such as Bluetooth, NFC, etc. other than a Wi-Fi communication method, and in this case, the electronic device 100 may receive information indicating that the target device 200 was connected to the selected AP as a response for the third AP information from the target device 200, or receive information indicating that the target device 200 was registered as a device constituting the IoT network.

According to the various embodiments described with reference to FIG. 2 above, in case information indicating that an AP that can be connected with the target device 200 exists is not received, the electronic device 100 can improve the efficiency in the network setting process of the target device 200 by providing a user interface and transmitting information on an AP according to a user's selection to the target device 200.

FIG. 3 is a diagram for illustrating an embodiment related to identifying a candidate AP based on an installation location of the target device 200 and an installation location of an external device.

As described above, if two or more candidate APs are identified as candidate APs, the electronic device 100 may determine priorities between the two or more candidate APs, and transmit a request to attempt connection for the two or more candidate APs according to the priorities to the target device 200. For example, the electronic device 100 may grant the highest priority to a candidate AP that has history of having been connected to the electronic device 100 among the two or more candidate APs, and grant the second highest priority to a candidate AP that has history of having been connected to at least one external device.

Meanwhile, in case a plurality of different candidate APs that have history of having been connected to a plurality of different external devices are included in the two or more candidate APs, the electronic device 100 may identify the installation location of the target device 200 and an installation location of at least one external device, and determine to which candidate APs high priorities will be granted among the plurality of different candidate APs based on the installation location of the target device 200 and the installation location of the at least one external device.

Here, the term 'installation location' may include not only a location wherein the target device 200 or an external device is actually installed, but also a location that is defined to have high possibility that the target device 200 or an external device may be installed.

A process of identifying the installation location of the target device 200 and an installation location of at least one external device may be performed through various embodiments as follows.

According to an embodiment, the electronic device 100 may identify the installation location of the target device 200 and an installation location of at least one external device based on the type of the target device 200 and the type of the at least one external device. Here, the type of the target device 200 or the type of the external device may be related to the function of the target device 200 or the external device, and may be identified based on a broadcasting signal received from the target device 200 or the external device.

As in the example in FIG. 3, the electronic device 100 may identify that the installation locations of a washing machine and a dryer are a laundry room (or a balcony, etc.) based on the fact that both of the washing machine and the dryer are devices performing functions related to washing, and identify that there is high possibility that at least the installation locations of the washing machine and the dryer are the same.

According to an embodiment, the electronic device 100 may receive a first signal and a second signal respectively from the target device 200 and at least one external device, and obtain information on the strength of the first signal and information on the strength of the second signal, and identify the installation location of the target device 200 and the installation location of the at least one external device based on the information on the strength of the first signal and the information on the strength of the second signal.

Here, the information on the strength of the signals may include received signal strength indicator (RSSI) values. Specifically, the electronic device 100 may perform analogue-digital conversion for the first signal and the second signal, and measure the energy strength of the first signal and the second signal by using frequency spectrum analysis, etc. The measured energy strength may be expressed as values in units such as decibel or decibel milliwatt, etc.

As the distance between the electronic device 100 and the target device 200 (or the external device) is farther, the RSSI value decreases, and as the distance between the electronic device 100 and the target device 200 (or the external device) is closer, the RSSI value increases. Thus, the electronic device 100 may obtain information on the distance between electronic device 100 and the target device 200 and information on the distance between the electronic device 100 and the external device based on the RSSI values.

Specifically, when an RSSI value is obtained, the electronic device 100 may convert the RSSI value into a distance by using a predefined distance estimation model, and thereby obtain the information on the distance between electronic device 100 and the target device 200 and the information on the distance between the electronic device 100 and the external device. Also, the electronic device 100 may identify the installation location of the target device 200 and the installation location of the external device based on the information on the distance between electronic device 100 and the target device 200 and the information on the distance between the electronic device 100 and the external device, and identify whether at least the installation location of the target device 200 and the installation location of the external device are the same.

When the installation location of the target device 200 and the installation location of the at least one external device are identified, the electronic device 100 may determine to which candidate APs high priorities will be granted among the plurality of different candidate APs based on the installation location of the target device 200 and the installation location of the at least one external device.

Specifically, in case connection for an AP connected to the electronic device 100 fails, the electronic device 100 may transmit a request to preferentially attempt connection for an AP that has history of having been connected to an external device of which installation location is identical to the target device 200 among the at least one external device to the target device 200.

In other words, a request to attempt connection for two or more candidate APs according to priorities may include a request to attempt connection for at least one AP that has history of having been connected to the electronic device 100, and in case the connection for the at least one AP that has history of having been connected to the electronic device 100 fails, to preferentially attempt connection for an AP that has history of having been connected to an external device of which installation location is identical to the target device 200 among the at least one external device.

As in the example in FIG. 3, in case the target device 200 is a washing machine, and at least one external device includes a dryer, an air conditioner, and a TV, the electronic device 100 may identify that the installation locations of the washing machine and the dryer are a laundry room, and the installation locations of the air conditioner and the TV are a living room. In this case, among the AP 1, the AP 2, and the AP 3, the electronic device 100 may grant a higher priority to the AP 2 that has history of having been connected to the dryer of which installation location is identical to the washing machine which is the target device 200 than AP 3, and transmit a request to preferentially attempt connection for the AP 2 to the washing machine which is the target device 200.

According to the various embodiments described above with reference to FIG. 3, in case a plurality of different candidate APs that have history of having been connected to a plurality of different external devices are included in two or more candidate APs, the electronic device 100 may grant priorities to the plurality of different candidate APs by a reasonable method, and can thereby improve the efficiency of a network setting process of the target device 200.

FIG. 4 is a flow chart illustrating a controlling method of the target device 200 according to an embodiment of the disclosure.

FIG. 4 is a diagram for illustrating a controlling method of the target device 200 related to the controlling method of the electronic device 100 explained with reference to FIG. 1. Accordingly, in the explanation regarding FIG. 4, explanation overlapping with the content explained in the explanation regarding FIG. 1 can be omitted.

Referring to FIG. 4, the target device 200 may receive first AP information on at least one candidate AP for network setting of the target device 200 from the electronic device 100 in operation S410. The first AP information may include identification information of the at least one candidate AP and password information for connecting to the at least one candidate AP. Also, in case the candidate APs are two or more candidate APs, the first AP information may include information on priorities between the two or more candidate APs and a request to attempt connection for the two or more candidate APs according to the priorities.

The target device 200 may identify whether an AP that can be connected with the target device 200 exists among the at least one candidate AP in operation S420. A process of identifying whether an AP that can be connected with the target device 200 exists among the at least one candidate AP, i.e., a process of identifying possibility of connection for the candidate APs may be performed through various embodiments as follows.

According to an embodiment, if the information on the priorities between the at least one candidate AP and a request to attempt connection for the two or more candidate APs according to the priorities are received from the electronic device 100, the target device 200 may identify whether an AP that can be connected with the target device 200 exists among the two or more candidate APs according to the priorities.

For example, a request to attempt connection for the two or more candidate APs according to the priorities may include a request to attempt connection for at least one AP that has history of having been connected to the electronic device 100, and in case the connection for the at least one AP that has history of having been connected to the electronic device 100 fails, to attempt connection for at least one AP that has history of having been connected to the at least one external device.

Also, a request to attempt connection for the two or more candidate APs according to the priorities may include a request to attempt connection for at least one AP that has history of having been connected to the electronic device 100, and in case the connection for the at least one AP that has history of having been connected to the electronic device 100 fails, to preferentially attempt connection for an AP that has history of having been connected to an external device of which installation location is identical to the target device 200 among the at least one external device.

The target device 200 may sequentially identify whether an AP that can be connected with the target device 200 exists among the two or more candidate APs according to the priorities, and transmit the identification result to the electronic device 100.

According to an embodiment, the target device 200 may search a plurality of APs, and if at least one candidate AP is included in the plurality of APs, the target device 200 may identify that an AP that can be connected with the target device 200 exists among the at least one candidate AP.

Specifically, the target device 200 may receive signals (e.g.: beacon signals) broadcasted by the plurality of APs. In the frames of the signals received from the plurality of APs, identification information on the plurality of APs (e.g.: service set identifiers (SSIDs)) may be included. The target device 200 may obtain a search result for the plurality of APs based on the identification information on the plurality of APs.

For example, in case the candidate APs included in the first AP information include a first candidate AP and a second candidate AP, the target device 200 may identify whether at least one of the first candidate AP or the second candidate AP is included in the plurality of APs searched by the target device 200. Then, if at least one of the first candidate AP or the second candidate AP is included in the plurality of APs searched by the target device 200, the target device 200 may identify that an AP that can be connected with the target device 200 exists among the at least one candidate AP.

According to an embodiment, the target device 200 may search a plurality of APs, and if at least one candidate AP is included in the plurality of APs, the target device 200 may obtain information on the strength of signals received from the at least one candidate AP. Then, the target device 200 may identify whether an AP that can be connected with the target device 200 exists among the at least one candidate AP, based on the information on the strength of signals received from the at least one candidate AP.

Specifically, the target device 200 may obtain information on the strength of signals received from the at least one candidate AP, and identify a candidate AP of which signal strength is greater than or equal to a predetermined threshold strength among the at least one candidate AP as an AP that can be connected with the target device 200. Here, the threshold strength may be, for example, -68dBm, and may be changed according to the setting of the user or the developer.

Meanwhile, in the above, a process of identifying possibility of connection for a candidate AP based on information on the strength of a signal was explained, but possibility of connection for a candidate AP may be identified in consideration of various elements that can indicate the quality of a signal as well as the strength of a signal.

According to an embodiment, in case information on priorities and a request to attempt connection for two or more candidate APs according to the priorities are received from the electronic device 100, the target device 200 may search a plurality of APs, and obtain information on the strength of signals received from the plurality of APs, and identify whether an AP that can be connected with the target device 200 exists among the at least one candidate AP by using the information on the strength of signals together with the information on the priorities. An embodiment in this regard will be described in more detail with reference to FIG. 6.

If it is identified that an AP that can be connected with the target device 200 exists among the at least one candidate AP, the target device 200 may transmit information indicating that an AP that can be connected with the target device 200 exists to the electronic device 100 in operation S430.

In case communicative connection is established between the electronic device 100 and the target device 200 by a Wi-Fi communication method, the target device 200 may finish communicative connection between the electronic device 100 and the target device 200 for connection with an AP, and after performing connection with an AP, access a server providing a platform for an IoT and register the target device 200 as a device constituting an IoT network.

Meanwhile, in case communicative connection is established between the electronic device 100 and the target device 200 by communication methods such as Bluetooth, NFC, etc. other than a Wi-Fi communication method, the target device 200 may transmit information indicating that the target device 200 is connected with a candidate AP to the electronic device 100 after finishing connection with the AP, or transmit information indicating that registration of the target device 200 was completed after registration of the target device 200 is completed to the electronic device 100. In other words, the target device 200 may attempt connection for a candidate AP, and transmit information indicating that the target device 200 is 'connected' with the candidate AP but not information regarding 'possibility of connection' of the target device 200 to the AP to the electronic device 100.

According to the various embodiments described with reference to FIG. 4 above, the target device 200 can effectively perform a connecting process between the target device 200 and an AP, and at the same time, improve the connection success rate. In particular, as the electronic device 100 identifies an AP having high possibility of being connected with the target device 200 or an AP having a high success rate of being connected with the target device 200 as a candidate AP, and transmits the first information in that regard to the target device 200, a process wherein the target device 200 searches ambient APs, a process wherein the target device 200 transmits information on the searched APs to the electronic device 100, etc. can be omitted, and thus efficiency in a network connection process of the target device 200 can be noticeably improved.

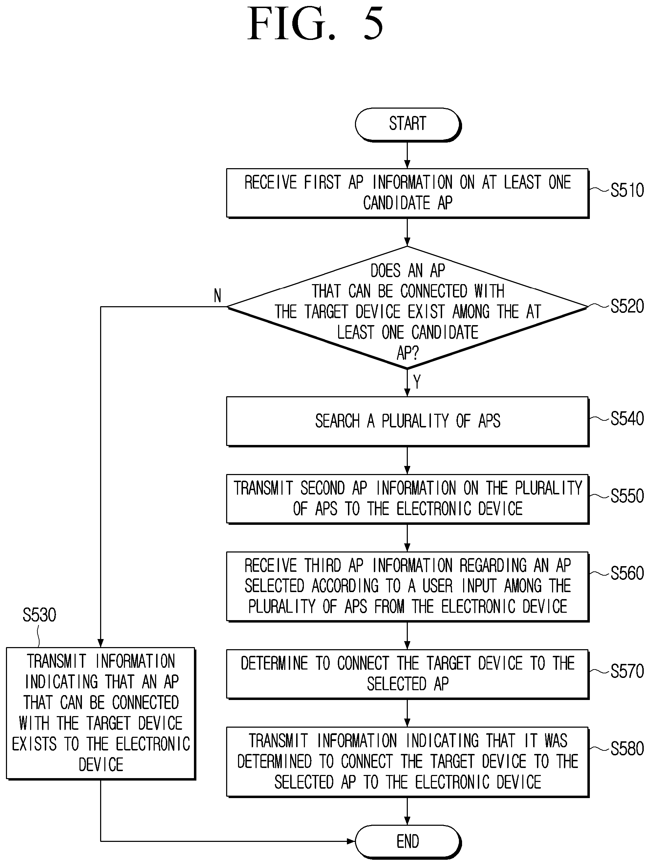

FIG. 5 is a diagram for illustrating an embodiment related to a case wherein an AP that can be connected with the target device 200 does not exist among at least one candidate AP.

FIG. 5 is a diagram for illustrating a controlling method of the target device 200 related to the controlling method of the electronic device 100 explained with reference to FIG. 2. Accordingly, in the explanation regarding FIG. 5, explanation overlapping with the content explained in the explanation regarding FIG. 2 can be omitted.

As explained with reference to FIG. 4, the target device 200 may receive first AP information on at least one candidate AP in operation S510, and identify whether an AP that can be connected with the target device 200 exists among the at least one candidate AP in operation S520. Then, if it is identified that an AP that can be connected with the target device 200 exists among the at least one candidate AP in operation S520-Y, the target device 200 may transmit information indicating that an AP that can be connected with the target device 200 exists to the electronic device 100 in operation S530.

Meanwhile, if it is identified that an AP that can be connected with the target device 200 does not exist among the at least one candidate AP in operation S520-N, the target device 200 may search a plurality of APs in operation S540, and transmit second AP information on the plurality of APs to the electronic device 100 in operation S550.

Specifically, when the first AP information is transmitted from the electronic device 100 to the target device 200, the target device 200 may identify whether an AP that can be connected with the target device 200 exists among the at least one candidate AP based on the first AP information, and transmit the identification result to the electronic device 100. In particular, if it is identified that an AP that can be connected with the target device 200 does not exist among the at least one candidate AP, the target device 200 may search a plurality of APs, and transmit the second AP information including information on the plurality of searched APs to the electronic device 100.

Meanwhile, the target device 200 may obtain information on the strength of signals transmitted from the plurality of searched APs to the target device 200, and include the information on the strength of signals transmitted from the plurality of APs to the target device 200 in the second AP information, and transmit the information to the electronic device 100. That is, the second AP information may include identification information on the plurality of APs searched by the target device 200, and the information on the strength of signals transmitted from the plurality of APs to the target device 200.

Meanwhile, the target device 200 may obtain information on the strength of signals transmitted from the plurality of APs searched by the target device 200 to the target device 200, and include only information on APs of which signal strength is greater than or equal to the threshold strength in the second AP information, and transmit the information to the electronic device 100, or identify APs in a threshold number in the order of the signal strength, and include only information on the APs in the threshold number in the second AP information, and transmit the information to the electronic device 100. That is, the target device 200 may transmit only information on APs in a top N number among the plurality of APs searched by the target device 200 to the electronic device 100, and can thereby improve the efficiency in the network setting process of the target device 200.

The target device 200 may receive third AP information regarding an AP selected according to a user input among the plurality of APs from the electronic device 100 in operation S560. Specifically, the electronic device 100 may provide a user interface including the second AP information on the plurality of APs searched by the target device 200, and receive a user input selecting one AP among the plurality of APs searched by the target device 200 through the user interface. As a result, the electronic device 100 may transmit the third AP information regarding the selected AP to the target device 200, and the target device 200 may receive the third AP information regarding the selected AP.

When the third AP information is received, the target device 200 may determine that the target device 200 is connected to the selected AP in operation S570, and transmit information indicating that it was determined to connect the target device 200 to the selected AP to the electronic device 100 in operation S580. Afterwards, the target device 200 may perform connection with the AP, and then access a server providing a platform for an IoT, and register the target device 200 as a device constituting an IoT network.

According to the various embodiments described with reference to FIG. 5 above, in case an AP that can be connected with the target device 200 does not exist among the candidate APs, the target device 200 may search a plurality of APs and transmit at least a part of the search result to the electronic device 100, and can thereby improve the efficiency in the network setting process of the target device 200.

FIG. 6 is a diagram for illustrating an embodiment related to a process of identifying whether an AP that can be connected with the target device 200 exists among at least one candidate AP.

As explained with reference to FIG. 4, if information on priorities between two or more candidate APs and a request to attempt connection for the two or more candidate APs according to the priorities are received from the electronic device 100, the target device 200 may identify whether an AP that can be connected with the target device 200 exists among the two or more candidate APs according to the priorities.

For example, referring to the table 610 in FIG. 6, the priorities among the candidate APs may be granted in the order of the AP 1, the AP 2, and the AP 3. In this case, the target device 200 may identify whether connection is possible in the order of the AP 1, the AP 2, and the AP 3.

Meanwhile, as explained with reference to FIG. 4, the target device 200 may search a plurality of APs, and if at least one candidate AP is included in the plurality of APs, the target device 200 may obtain information on the strength of signals received from the at least one candidate AP. Then, the target device 200 may identify whether an AP that can be connected with the target device 200 exists among the at least one candidate AP based on the information on the strength of signals received from the at least one candidate AP.

Specifically, the target device 200 may obtain information on the strength of signals received from at least one candidate AP, and identify a candidate AP of which signal strength is greater than or equal to the predetermined threshold strength among the at least one candidate AP as an AP that can be connected with the target device 200.

For example, referring to the table 620 in FIG. 6, the target device 200 may search a plurality of APs which are an AP 2, an AP 3, an AP 4, an AP 5, an AP 6, and an AP 9. Here, the AP 2 and the AP 3 may be candidate APs identified by the electronic device 100. Also, the strength of a signal received from the AP 2 may be -50dBm, and the strength of a signal received from the AP 3 may be -70dBm.

In this case, if the predetermined threshold strength is -68dBm, the strength of the signal received from the AP 2 is greater than or equal to the threshold strength, but the strength of the signal received from the AP 3 is smaller than the threshold strength. Accordingly, the target device 200 may identify the AP 2 of which signal strength is greater than or equal to the predetermined threshold strength among the at least one candidate AP as an AP that can be connected with the target device 200.

In contrast, referring to the table 630 in FIG. 6, the strength of a signal received from the AP 2 which is a candidate AP identified by the electronic device 100 may be -77dBm, and the strength of a signal received from the AP 3 which is a candidate AP identified by the electronic device 100 may be -70dBm.

In this case, if the predetermined threshold strength is -68dBm, both of the strength of the signal received from the AP 2 and the strength of the signal received from the AP 3 are smaller than the threshold strength. Accordingly, the target device 200 may identify that an AP that can be connected with the target device 200 does not exist among the at least one candidate AP.

Meanwhile, in consideration of both the information on the priorities among the at least one candidate AP and the information on the strength of signals received from the at least one candidate AP, the target device 200 may identify whether an AP that can be connected with the target device 200 exists among the two or more candidate APs. Specifically, the target device 200 may identify an AP having a higher priority among the two or more candidate APs having signal strength greater than or equal to the threshold strength as an AP that can be connected with the target device 200.

For example, referring to the table 640 in FIG. 6, the strength of a signal received from the AP 2 which is a candidate AP identified by the electronic device 100 may be -50dBm, and the strength of a signal received from the AP 3 which is a candidate AP identified by the electronic device 100 may be -60dBm. Also, the priority of the AP 3 may be higher than the priority of the AP 2. In this case, if the predetermined threshold strength is - 68dBm, both of the strength of the signal received from the AP 2 and the strength of the signal received from the AP 3 are greater than or equal to the threshold strength. Accordingly, the target device 200 may identify the AP 3 having a higher priority between the AP 2 and the AP 3 as an AP that can be connected with the target device 200.

Meanwhile, contrary to the example in the table 640 in FIG. 6, the target device 200 may identify an AP of which signal strength is bigger between two or more candidate APs having priorities greater than or equal to the threshold priority as an AP that can be connected with the target device 200.

According to the various embodiments described with reference to FIG. 6 above, the target device 200 can verify whether candidate APs meet a required condition for network setting of an IoT based on information on the priorities among the candidate APs and information on the strength of signals received from the candidate APs, and then perform connection for an AP.

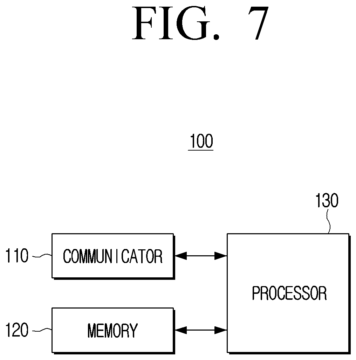

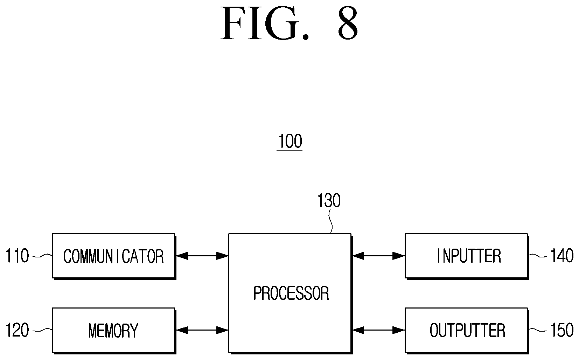

FIG. 7 is a block diagram schematically illustrating a configuration of the electronic device 100 according to one or more embodiment of the disclosure, and FIG. 8 is a block diagram illustrating in detail a configuration of the electronic device 100 according to one or more embodiment of the disclosure.

FIG. 7 is a block diagram schematically illustrating a configuration of the electronic device 100 according to an embodiment of the disclosure, and FIG. 8 is a block diagram illustrating in detail a configuration of the electronic device 100 according to an embodiment of the disclosure.

As illustrated in FIG. 7, the electronic device 100 according to an embodiment of the disclosure includes a communicator 110, a memory 120, and a processor 130. Also, as illustrated in FIG. 8, the electronic device 100 may further include an inputter 140 and an outputter 150. However, the components as illustrated in FIG. 7 and FIG. 8 are merely exemplary ones, and in carrying out the disclosure, it is obvious that new components can be added in addition to the components as illustrated in FIG. 7 and FIG. 8, or some components can be omitted.

The communicator 110 may include circuitry, and perform communication with an external device. Specifically, the processor 130 may receive various kinds of data or information from an external device connected through the communicator 110, and transmit various types of data or information to the external device.

The communicator 110 may include at least one of a Wi-Fi module, a Bluetooth module, a wireless communication module, an NFC module, or an ultra-wide band (UWB) mode. Specifically, a Wi-Fi module and a Bluetooth module may perform communication by a Wi-Fi method and a Bluetooth method, respectively. In the case of using a Wi-Fi module or a Bluetooth module, various types of connection information such as an SSID, etc. is transmitted and received first, and connection of communication is performed by using the information, and various types of information can be transmitted and received thereafter.

Also, a wireless communication module may perform communication according to various communication standards such as IEEE, Zigbee, 3rd Generation (3G), 3rd Generation Partnership Project (3GPP), Long Term Evolution (LTE), 5th Generation (5G), etc. In addition, an NFC module may perform communication by a near field communication (NFC) method using a 13.56MHz band among various RF-ID frequency bands such as 135kHz, 13.56MHz, 433MHz, 860 - 960MHz, 2.45GHz, etc. Further, a UWB module can correctly measure a Time of Arrival (ToA) which is the time that a pulse reaches a target, and an Angle of Arrival (AoA) which is a pulse arrival angle in a transmission device through communication between UWB antennas, and accordingly, the UWB module can perform precise distance and location recognition in an error range of within scores of cm indoors.

According to an embodiment, the processor 130 may receive a request for network setting of the target device 200 from the target device 200 through the communicator 110. The processor 130 may control the communicator 110 to transmit the first AP information on at least one candidate AP to the target device 200. The processor 130 may receive information indicating that an AP that can be connected with the target device 200 exists among the at least one candidate AP as a response for the first AP information from the target device 200 through the communicator 110.

The processor 130 may receive second AP information on a plurality of APs searched by the target device 200 as a response for the first AP information from the target device 200 through the communicator 110. The processor 130 may control the display 110 to transmit third AP information regarding a selected AP to the target device 200. Then, the processor 130 may receive information indicating that it was determined to connect the target device 200 to the selected AP as a response for the third AP information from the target device 200 through the communicator 110.

The processor 130 may control the communicator 110 to transmit the second AP information on the plurality of APs searched by the target device 200 to a user terminal.

In the memory 120, at least one instruction regarding the electronic device 100 may be stored. Also, in the memory 120, an operating system (O/S) for operating the electronic device 100 may be stored. In addition, in the memory 120, various types of software programs or applications for making the electronic device 100 operate according to the various embodiments of the disclosure may be stored. Further, the memory 120 may include semiconductor memory 120 such as flash memory 120, etc. or a magnetic storage medium such as a hard disk, etc.

Specifically, in the memory 120, various kinds of software modules for the electronic device 100 to operate according to the various embodiments of the disclosure may be stored, and the processor 130 may control the operations of the electronic device 100 by executing the various kinds of software modules stored in the memory 120. That is, the memory 120 may be accessed by the processor 130, and reading/recording/correction/deletion/update, etc. of data by the processor 130 may be performed.

Meanwhile, in the disclosure, the term memory 120 may be used as a meaning including the memory 120, ROM and RAM inside the processor 130, or a memory card (e.g., a micro SD card, a memory stick) installed on the electronic device 100.

According to an embodiment, information on a plurality of APs may be stored in the memory 120. 'Information on a plurality of APs' may include identification information of the plurality of APs (e.g.: a service set identifier (SSID)) and password information for connecting to the plurality of APs. Also, the information on the plurality of APs may include information on at least one AP that has history of having been connected to the electronic device 100, and information on at least one AP that has history of having been connected to at least one external device.

In the memory 120, the first AP information, the second AP information, and the third AP information, information on a standard for determining priorities among two or more candidate APs, information on the determined priorities, information on the strength of received signals, information on a user interface, information on the type of the target device 200, information on the type of an external device, etc. may be stored.

Other than the above, various kinds of information that are necessary within a range for achieving the purpose of the disclosure may be stored in the memory 120, and the information stored in the memory 120 may be updated as information is received from an external device or input by a user.

The processor 130 controls the overall operations of the electronic device 100. Specifically, the processor 130 may be connected with the components of the electronic device 100 including the communicator 110, the memory 120, the inputter 140, and the outputter 150, and control the overall operations of the electronic device 100 by executing the at least one instruction stored in the memory 120 as described above.

The processor 130 may be implemented in various ways. For example, the processor 130 may be implemented as at least one of an application specific integrated circuit (ASIC), an embedded processor 130, a microprocessor 130, hardware control logic, a hardware finite state machine (FSM), or a digital signal processor (DSP) 130. Meanwhile, in the disclosure, the term processor 130 may be used as a meaning including a central processing unit (CPU), a graphic processing unit (GPU), and a main processing unit (MPU), etc.

According to an embodiment, if a request for network setting of the target device 200 is received, the processor 130 may identify at least one candidate AP for the network setting of the target device 200 among a plurality of access points (APs) on the basis of information on the plurality of APs stored in the memory 120, control the communicator 110 to transmit first AP information on the at least one candidate AP to the target device 200, and based on receiving information indicating that an AP that can be connected with the target device 200 exists among the at least one candidate AP as a response for the first AP information from the target device 200 through the communicator 110, identify that the network setting of the target device 200 is possible.

As various embodiments according to the disclosure based on control by the processor 130 were described above with reference to FIG. 1 to FIG. 3, overlapping explanation will be omitted.

The inputter 140 may include circuitry, and the processor 130 may receive a user instruction for controlling the operations of the electronic device 100 through the inputter 140. Specifically, the inputter 140 may consist of components such as a microphone, a camera, and a remote control signal receiver, etc. Also, the inputter 140 may be implemented in a form of being included in the display as a touch screen. In particular, the microphone may receive a voice signal, and convert the received voice signal into an electric signal.

According to an embodiment, the processor 130 may receive user inputs such as a user input corresponding to a request for network setting of the target device 200, a user input selecting one AP among a plurality of APs searched by the target device 200, etc. through the inputter 140.

The outputter 150 may include circuitry, and the processor 130 may output various functions that can be performed by the electronic device 100 through the outputter 150. Also, the outputter 150 may include at least one of a display, a speaker, or an indicator.

The display may output image data by control by the processor 130. Specifically, the display may output an image stored in advance in the memory 120 by control by the processor 130.

In particular, the display according to an embodiment of the disclosure may display a user interface stored in the memory 120. The display may be implemented as a liquid crystal display (LCD) panel, organic light emitting diodes (OLEDs), etc. In addition, the display may also be implemented as a flexible display, a transparent display, etc. depending on cases. However, the display according to the disclosure is not limited to a specific type.

The speaker may output audio data by control by the processor 130.

The indicator may be turned on by control by the processor 130. Specifically, the indicator may be turned on in various colors according to control by the processor 130. For example, the indicator may be implemented as light emitting diodes (LEDs), a liquid crystal display (LCD) panel, a vacuum fluorescent display (VFD), etc., but is not limited thereto.

According to an embodiment, if second AP information on a plurality of APs searched by the target device 200 is received as a response for the first AP information from the target device 200 through the communicator 110, the processor 130 may control the display to display a user interface including the second AP information. Then, if a user input selecting one AP among the plurality of APs is received through the user interface, the processor 130 may control the communicator 110 to transmit third AP information regarding the selected AP to the target device 200, and based on receiving information indicating that it was determined to connect the target device 200 to the selected AP is received as a response for the third AP information from the target device 200 through the communicator 110, identify that the network setting of the target device 200 is possible.

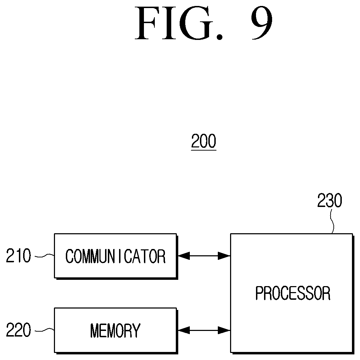

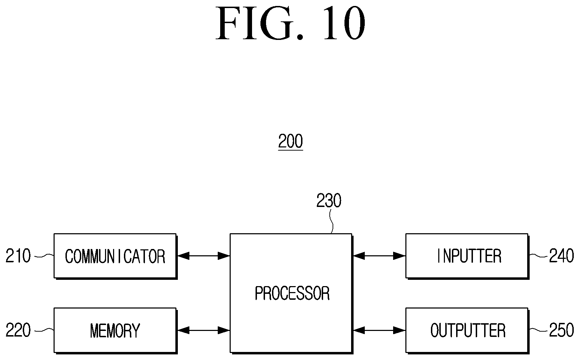

FIG. 9 is a block diagram schematically illustrating a configuration of the target device 200 according to an embodiment of the disclosure, and FIG. 10 is a block diagram illustrating in detail a configuration of the target device 200 according to an embodiment of the disclosure.

As illustrated in FIG. 9, the target device 200 according to an embodiment of the disclosure includes a communicator 210, a memory 220, and a processor 230. Also, as illustrated in FIG. 10, the target device 200 may further include an inputter 240 and an outputter 250. However, the components as illustrated in FIG. 9 and FIG. 10 are merely exemplary ones, and in carrying out the disclosure, it is obvious that new components can be added in addition to the components as illustrated in FIG. 9 and FIG. 10, or some components can be omitted.

Meanwhile, the communicator 210, the memory 220, the processor 230, the inputter 240, and the outputter 250 included in the target device 200 may consist of hardware of the same types as the communicator 110, the memory 120, the processor 130, the inputter 140, and the outputter 150 included in the electronic device 100. Accordingly, explanation regarding the communicator 110, the memory 120, the processor 130, the inputter 140, and the outputter 150 of the electronic device 100 described above with reference to FIG. 7 and FIG. 8 can also be applied to the communicator 210, the memory 220, the processor 230, the inputter 240, and the outputter 250 of the target device 200 in the same manner. Accordingly, overlapping explanation regarding the same content will be omitted.

According to an embodiment, the processor 230 may receive first AP information for at least one candidate access point (AP) for network setting of the target device 200 from the electronic device 100 through the communicator 210. The processor 230 may control the communicator 210 to transmit an identification result regarding whether an AP that can be connected with the target device 200 exists among the at least one candidate AP to the electronic device 100. That is, the processor 230 may control the communicator 210 to transmit information indicating that an AP that can be connected with the target device 200 exists or second AP information on a plurality of APs that can be connected with the target device 200 to the electronic device 100.

Also, the processor 230 may receive third AP information regarding an AP selected according to a user input among the plurality of APs from the electronic device 100 through the communicator 210. Then, the processor 230 may control the communicator 210 to transmit information indicating that it was determined to connect the target device 200 to the selected AP to the electronic device 210.

According to an embodiment, in the memory 220, the first AP information, the second AP information, and the third AP information, information on priorities, information on the strength of received signals, etc. may be stored.

According to an embodiment, the processor 230 may receive first AP information for at least one candidate access point (AP) for network setting of the target device 200 from the electronic device 100 through the communicator 210, identify whether an AP that can be connected with the target device 200 exists among the at least one candidate AP, and based on identifying that an AP that can be connected with the target device 200 exists among the at least one candidate AP, control the communicator 210 to transmit information indicating that an AP that can be connected with the target device 200 exists to the electronic device 100.

According to an embodiment, the processor 230 may receive a user input corresponding to a request for network setting of the target device 200 through the inputter 240.

According to an embodiment, the processor 230 may control the outputter 250 to output information such as information indicating that connection has been established between the target device 200 and an AP, information indicating that the target device 200 was registered as a device constituting an IoT network, etc.

Meanwhile, a controlling method of the electronic device 100 according to the aforementioned embodiment may be implemented as a program and provided to the electronic device 100. In particular, a program including a controlling method of the electronic device 100 may be provided while being stored in a non-transitory computer readable medium.

Specifically, in a non-transitory computer readable medium including a program executing a controlling method of the electronic device 100, the controlling method of the electronic device 100 may include the steps of, based on receiving a request for network setting of the target device 200, identifying at least one candidate AP for the network setting of the target device 200 among a plurality of access points (APs) on the basis of information on the plurality of APs stored in the memory, transmitting first AP information on the at least one candidate AP to the target device 200, and based on receiving information indicating that an AP that can be connected with the target device 200 exists among the at least one candidate AP as a response for the first AP information from the target device 200, identifying that the network setting of the target device 200 is possible.

Likewise, a controlling method of the target device 200 according to the aforementioned embodiment may be implemented as a program and provided to the target device 200. In particular, a program including a controlling method of the target device 200 may be provided while being stored in a non-transitory computer readable medium.

Specifically, in a non-transitory computer readable medium including a program executing a controlling method of the target device 200, the controlling method of the target device 200 may include the steps of receiving first AP information for at least one candidate access point (AP) for network setting of the target device 200 from the electronic device 100, identifying whether an AP that can be connected with the target device 200 exists among the at least one candidate AP, and based on identifying that an AP that can be connected with the target device 200 exists among the at least one candidate AP, transmitting information indicating that an AP that can be connected with the target device exists 200 to the electronic device 100.

In the above, the electronic device 100, the target device 200, a computer readable recording medium including a program executing a controlling method of the electronic device 100, and a computer readable recording medium including a program executing a controlling method of the target device 200 were explained schematically, but this is only for omitting overlapping explanation, and the various embodiments regarding the electronic device 100 and the various embodiments regarding the target device 200 can also be applied to the electronic device 100, the target device 200, a computer readable recording medium including a program executing a controlling method of the electronic device 100, and a computer readable recording medium including a program executing a controlling method of the target device 200 in the same manner.

A storage medium that is readable by machines may be provided in the form of a non-transitory storage medium. Here, the term 'non-transitory' only means that the device is a tangible device, and does not include a signal (e.g.: an electromagnetic wave), and the term does not distinguish a case wherein data is stored semi-permanently in a storage medium and a case wherein data is stored temporarily. For example, 'a non-transitory storage medium' may include a buffer wherein data is temporarily stored.

According to an embodiment, methods according to the various embodiments disclosed herein may be provided while being included in a computer program product. A computer program product refers to a product, and it can be traded between a seller and a buyer. A computer program product can be distributed in the form of a storage medium that is readable by machines (e.g.: a compact disc read only memory (CD-ROM)), or distributed directly on-line (e.g.: download or upload) through an application store (e.g.: Play Store^{TM}), or between two user devices (e.g.: smartphones). In the case of on-line distribution, at least a portion of a computer program product (e.g.: a downloadable app) may be stored in a storage medium readable by machines such as the server of the manufacturer, the server of the application store, and the memory of the relay server at least temporarily, or may be generated temporarily.

Also, each of the components (e.g.: a module or a program) according to the aforementioned various embodiments of the disclosure may consist of a singular object or a plurality of objects. In addition, among the aforementioned corresponding sub components, some sub components may be omitted, or other sub components may be further included in the various embodiments. Alternatively or additionally, some components (e.g.: a module or a program) may be integrated as an object, and perform functions that were performed by each of the components before integration identically or in a similar manner.

In addition, operations performed by a module, a program, or other components according to the various embodiments may be executed sequentially, in parallel, repetitively, or heuristically. Or, at least some of the operations may be executed in a different order or omitted, or other operations may be added.

Meanwhile, the term "a part" or "a module" used in the disclosure may include a unit implemented as hardware, software, or firmware, and may be interchangeably used with, for example, terms such as a logic, a logical block, a component, or circuitry, etc. In addition, "a part" or "a module" may be a component constituted as an integrated body or a minimum unit or a part thereof performing one or more functions. For example, a module may be constituted as an application specific integrated circuit (ASIC).

Also, the various embodiments of the disclosure may be implemented as software including instructions stored in machine-readable storage media, which can be read by machines (e.g.: computers). The machines refer to devices that call instructions stored in a storage medium, and can operate according to the called instructions, and the devices may include an electronic device according to the aforementioned embodiments (e.g.: the electronic device 100, the target device 200).

In case an instruction is executed by a processor, the processor may perform a function corresponding to the instruction by itself, or by using other components under its control. An instruction may include a code that is generated or executed by a compiler or an interpreter.

Also, while preferred embodiments of the disclosure have been shown and described, the disclosure is not limited to the aforementioned specific embodiments, and it is apparent that various modifications may be made by those having ordinary skill in the technical field to which the disclosure belongs, without departing from the gist of the disclosure as claimed by the appended claims. Further, it is intended that such modifications are not to be interpreted independently from the technical idea or prospect of the disclosure.

## Claims

1. An electronic device comprising:
a communicator;
a memory to store at least one instruction and information associated with a plurality of access points (APs); and
a processor configured to execute the at least one instruction to:
based on receiving a request for network setting of a target device, identify at least one candidate access point (AP) for the network setting of the target device among the plurality of APs based on the information associated with the plurality of APs stored in the memory,
control the communicator to transmit AP information associated with the at least one candidate AP to the target device, and
based on receiving, from the target device through the communicator, information that an AP connectable with the target device exists among the at least one candidate AP as a response to the AP information transmitted to the target device, identify that the network setting of the target device is possible.

2. The electronic device of claim 1, wherein the AP information transmitted to the target device is first AP information, and
the electronic device further includes a display, and
the processor is configured to:
based on receiving second AP information associated with a plurality of other APs searched by the target device as the response to the first AP information from the target device through the communicator, control the display to display a user interface including the second AP information,
based on receiving a user input selecting one AP, among the plurality of other APs searched by the target device, through the user interface, control the communicator to transmit third AP information regarding the selected one AP to the target device, and
based on receiving information indicating that determination to connect the target device to the selected one AP is made as a response for the third AP information from the target device through the communicator, identify that the network setting of the target device is possible.

3. The electronic device of claim 1,
wherein the processor is configured to:
based on two or more candidate APs being identified as the at least one candidate AP, determine priorities between the two or more candidate APs, and
control the communicator to transmit information associated with the priorities and a request to attempt connection for the two or more candidate APs according to the priorities to the target device.

4. The electronic device of claim 3,
wherein the request to attempt connection for the two or more candidate APs according to the priorities includes a request to attempt connection for at least one AP that has a history of having been connected to the electronic device, and in case the request to attempt connection for the at least one AP that has the history of having been connected to the electronic device fails, attempt connection for at least one AP that has history of having been connected to at least one external device.

5. The electronic device of claim 4,
wherein the processor is configured to:
identify an installation location of the target device and an installation location of the at least one external device, and
in case connection for an AP connected to the electronic device fails, control the communicator to transmit a request to preferentially attempt connection for an AP that has a history of having been connected to an external device of which installation location is identical to the target device among the at least one external device to the target device.

6. The electronic device of claim 5,
wherein the processor is configured to:
identify the installation location of the target device and the installation location of the at least one external device based on a type of the target device and a type of the at least one external device.

7. The electronic device of claim 5,
wherein the processor is configured to:
receive a first signal and a second signal, respectively, from the target device and the at least one external device through the communicator,
obtain information associated with a strength of the first signal and information associated with a strength of the second signal, and
identify the installation location of the target device and the installation location of the at least one external device based on the information associated with the strength of the first signal and the information associated with the strength of the second signal.

8. A target device comprising:
a communicator;
a memory to store at least one instruction; and
a processor configured to execute the at least one instruction to:
receive AP information for at least one candidate access point (AP) for network setting of the target device from an electronic device through the communicator,
identify whether an AP connectable with the target device exists among the at least one candidate AP, and
based on identifying that an AP connectable with the target device exists among the at least one candidate AP, control the communicator to transmit, to the electronic device, information indicating that the AP connectable with the target device exists as a response to the received AP information for the at least one candidate AP.

9. The target device of claim 8, the AP information transmitted to the target device is first AP information, and
wherein the processor is configured to:
based on identifying that an AP connectable with the target device does not exist among the at least one candidate AP, perform a search in association with a plurality of APs,
control the communicator to transmit second AP information associated with the plurality of APs to the electronic device,
based on receiving third AP information regarding an AP selected according to a user input among the plurality of APs from the electronic device through the communicator, determine to connect the target device to the selected AP, and
control the communicator to transmit information indicating determination to connect the target device to the selected AP is made to the electronic device.

10. The target device of claim 8
wherein the processor is configured to:
perform a search in association with a plurality of APs, and
based on the at least one candidate AP being included in the plurality of APs, identify that an AP connectable with the target device exists among the at least one candidate AP.

11. The target device of claim 8,
wherein the processor is configured to:
perform a search in association with a plurality of APs,
based on the at least one candidate AP being included in the plurality of APs, obtain information associated with a strength of a signal received from the at least one candidate AP, and
based on the information associated with the strength of the signal, identify whether an AP connectable with the target device exists among the at least one candidate AP.

12. The target device of claim 8,
wherein the processor is configured to:
based on receiving information associated with priorities among the at least one candidate AP and a request to attempt connection for two or more candidate APs according to the priorities from the electronic device through the communicator, identify whether an AP connectable with the target device exists among the two or more candidate APs according to the priorities.

13. A controlling method of an electronic device, the controlling method comprising:
based on receiving a request for network setting of a target device, identifying at least one candidate access point (AP) for the network setting of the target device among a plurality of access points (APs) based on information associated with the plurality of APs stored in a memory;
transmitting AP information associated with the at least one candidate AP to the target device; and
based on receiving, from the target device, information indicating that an AP connectable with the target device exists among the at least one candidate AP as a response to the AP information transmitted to the target device, identifying that the network setting of the target device is possible.

14. The controlling method of claim 13, wherein the AP information transmitted to the target device is first AP information, and
wherein the controlling method of an electronic device comprises:
based on receiving second AP information associated with a plurality of other APs searched by the target device as the response to the first AP information from the target device, providing a user interface including the second AP information;
based on receiving a user input selecting one AP among the plurality of other APs searched by the target device, through the user interface, transmitting third AP information regarding the selected one AP to the target device; and
based on receiving information indicating that determination to connect the target device to the selected one AP is made as a response for the third AP information from the target device, identifying that the network setting of the target device is possible.

15. The controlling method of claim 13,
wherein the controlling method of an electronic device further comprises:
based on two or more candidate APs being identified as the at least one candidate AP, determining priorities between the two or more candidate APs; and
transmitting information associated with the priorities and a request to attempt connection for the two or more candidate APs according to the priorities to the target device.
